# EUROPEAN PATENT SPECIFICATION

(11) **EP 3 916 928 B1**
(45) Date of publication and mention of the grant of the patent: **04.09.2024**
(21) Application number: 20776628.8
(22) Date of filing: 18.03.2020
(51) Int. Cl.: H01R 13/46, H04M 1/02, H01R 13/52, H01R 24/60, H04M 1/18, H01R 107/00

(54) **FEMALE CONNECTOR, ELECTRONIC DEVICE, AND MANUFACTURING METHOD FOR FEMALE CONNECTOR**
BUCHSE, ELEKTRONISCHE VORRICHTUNG UND HERSTELLUNGSVERFAHREN FÜR BUCHSE
CONNECTEUR FEMELLE, DISPOSITIF ÉLECTRONIQUE ET PROCÉDÉ DE FABRICATION DE CONNECTEUR FEMELLE

(30) Priority: 26.03.2019 CN 201910234396; 06.06.2019 CN 201910491873
(43) Date of publication of application: 01.12.2021
(60) Divisional application: 24191504.0
(73) Proprietor: Huawei Technologies Co., Ltd., Shenzhen, Guangdong 518129 (CN)
(72) Inventor: HU, Gang, Shenzhen, Guangdong 518129 (CN); LIN, Hongfan, Shenzhen, Guangdong 518129 (CN); SU, Tien Chieh, Shenzhen, Guangdong 518129 (CN); LEI, Gaobing, Shenzhen, Guangdong 518129 (CN)
(74) Representative: Pfenning, Meinig & Partner mbB
(86) International application number: PCT/CN2020/079819
(87) International publication number: WO 2020/192505

(56) References cited:
- CN-A- 110 212 342
- CN-U- 204 947 178
- CN-U- 208 272 198
- US-A1- 2013 183 844
- US-A1- 2018 151 978
- US-A1- 2018 175 560
- US-A1- 2020 076 118
- US-B1- 9 634 425
- US-B1- 9 761 988

## Description

### TECHNICAL FIELD

This application relates to the field of electronic devices, and more specifically, to a female connector, an electronic device, and a method for manufacturing a female connector in the field of electronic devices.

### BACKGROUND

A female connector is widely used in various electronic devices, a socket is arranged on the electronic device, and a male connector connected to an external device is inserted into the female connector through the socket, so as to implement connection between the external device and the electronic device. Therefore, the external device may be configured to charge the electronic device, or the external device may perform data transmission with the electronic device.

Waterproof performance of an existing electronic device is relatively poor. After the electronic device is immersed in water, water may enter an interior of the electronic device through a socket arranged on the electronic device, causing damage to the electronic device.

Therefore, it is desirable to provide a female connector to improve waterproof performance of an electronic device.

US 2013/183844 A1 discloses that an electrical connector includes a metallic shell, an insulative housing combined to the metallic shell, a plurality of terminals retained in the insulative housing, an insulative cover covering the metallic shell, a waterproof ring and a waterproof plate respectively attached to a front end and a rear face of the insulative cover, and a fixing member attached to the insulative cover.

US 2018/151978 A1 discloses that an electrical connector includes: an insulative housing having a base and a tongue; plural contacts affixed to the insulative housing and exposed to the tongue; a shielding shell enclosing the insulative housing and having a front end; an outer cover enclosing the shielding shell and having a front protrusion, an annular slot being defined between the front end of the shielding shell and the front protrusion of the outer cover; a rear sealer sealing an interfacing gap between the shielding shell and the outer cover; and a front sealer disposed in the annular slot; wherein at least one of the shielding shell, the outer cover, and the front sealer has a groove in fluid communication with the interfacing gap.

### SUMMARY

The present invention is set out in the appended set of claims. Embodiments of this application provide a female connector, an electronic device, and a method for manufacturing a female connector. A waterproof ring is arranged between an end face of a head of a housing of the female connector and a casing, so that an outer end face of the waterproof ring that is not in contact with the housing fits a casing of a device on which the female connector is mounted in a sealed manner, so as to seal a gap between the end face of the head of the housing and the casing. This can prevent external water from seeping into an interior of the device, thereby improving waterproof performance of the device.

According to a first aspect, a female connector is provided, which is applied to an electronic device, where the female connector includes a housing, a waterproof ring, and a tongue.

The housing is formed as a cavity with two ends open, and includes a first end face, the first end face is close to a first area of the tongue, and the first area of the tongue is used to connect a male connector.

The waterproof ring is of an annular structure, is assembled on the first end face, and includes an outer end face that is not in contact with the housing. The outer end face is used to fit a casing of the electronic device in a sealed manner.

The tongue is arranged inside the cavity of the housing, and in a direction extending from one end of the housing to the other end, the tongue penetrates the housing and the waterproof ring.

Therefore, according to the female connector provided in this embodiment of this application, the waterproof ring is arranged between the housing of the female connector and the casing of the electronic device, and the waterproof ring is assembled on the first end face of the housing of the female connector that is close to the area of the tongue for electrically connecting the male connector, so that the outer end face of the waterproof ring that is not in contact with the housing is used to fit the casing of the electronic device in a sealed manner, so as to implement end face sealing. On one hand, through the end face sealing between the outer end face of the waterproof ring and the casing of the electronic device, a gap between the first end face of the housing of the female connector and the casing of the electronic device may be sealed, so as to prevent water from seeping into an interior of the electronic device, thereby improving waterproof performance of the electronic device. On the other hand, because the waterproof ring can be directly assembled on the first end face of the housing of the female connector, it is unnecessary to form a waterproof ring that is sleeved on a side surface of the housing through injection molding by using a mold. First, costs caused by complexity of a process of forming the waterproof ring through injection molding may be reduced. Second, a problem that the waterproof performance of the electronic device is relatively low due to abnormality of the mold may be avoided as much as possible. Third, in comparison with a structure in which radial sealing is implemented between a side surface of the waterproof ring and the casing of the electronic device, the end face sealing implemented between the outer end face of the waterproof ring and the casing of the electronic device can reduce a size of the female connector in a thickness direction, thereby reducing a size of the electronic device in a thickness direction, and helping reduce a size of a socket arranged on the electronic device in a thickness direction.

Optionally, the first end face is provided with a groove, the waterproof ring includes a first part and a second part, the first part is inserted into the groove, the second part is exposed outside the groove, and the second part includes the outer end face.

Therefore, according to the female connector provided in this embodiment of this application, the first end face of the housing is provided with the groove, and the waterproof ring is inserted into the groove. On one hand, the waterproof ring can be well positioned, and the waterproof ring can be easily fixed, thereby preventing the waterproof ring from being dislocated or detached from the first end face of the housing. On the other hand, water may seep into the electronic device through an area in which the waterproof ring is in contact with the housing, and through arrangement of the groove, the waterproof ring is inserted into the groove, and the groove is in contact with the waterproof ring. This may increase a contact area between the waterproof ring and the housing, and increase a distance that water passes through, making it difficult for water to seep into the electronic device, thereby improving waterproof stability of the electronic device and improving a waterproof effect of the electronic device.

Optionally, an adhesive layer is arranged between the first part and the groove, and the adhesive layer is separately attached to a surface of the first part and a surface of the groove.

Therefore, according to the female connector provided in this embodiment of this application, the adhesive layer attached to the groove and the first part is arranged between the first part of the waterproof ring and the groove, so that a gap between the groove and the first part can be effectively sealed, thereby further improving a waterproof effect of the device. In addition, the adhesive layer can further improve adhesion between the waterproof ring and the groove, so that the waterproof ring can be better stuck in the groove.

Optionally, the waterproof ring includes an inner end face, the inner end face is a stepped surface, and the inner end face includes an inner stepped surface and an outer stepped surface; the inner stepped surface is an end face of the first part that is in contact with a bottom surface of the groove, the outer stepped surface is an end face of the second part that is in contact with the first end face, and an area of the outer end face is greater than an area of the inner stepped surface.

Therefore, according to the female connector in this embodiment of this application, the stepped waterproof ring is arranged, so that an area of the outer end face of the waterproof ring is greater than an area of the inner stepped surface that is in contact with the bottom surface of the groove, thereby increasing a sealing area between the outer end face and the casing, improving a sealing effect, and further improving the waterproof performance of the electronic device.

Optionally, the female connector further includes a metal member, and the metal member is fixedly connected to the housing.

Therefore, according to the female connector in this embodiment of this application, arrangement of the metal member that is fixedly connected to the housing can effectively increase strength of the housing. This structure may be well applied to a case in which the housing is designed as a plastic housing.

Optionally, the metal member includes an embedded part and an exposed part, the embedded part is embedded into the housing and extends in a direction away from the first end face of the housing, and the exposed part is located at two ends of the embedded part and bent toward the inside of the cavity of the housing to form a snap-in structure.

The tongue includes a stopper member, and the stopper member is stuck in the exposed part.

Optionally, the metal member is made of steel.

Optionally, the housing is made of plastic.

Therefore, according to the female connector in this embodiment of this application, the housing is arranged as a plastic housing. In a process of implementing data transmission or charging by using the female connector, electromagnetic waves generated by the metal housing and the male connector may be avoided, so as to reduce impact on antenna performance and improve antenna performance of the device.

Optionally, the waterproof ring is made of silica gel.

According to a second aspect, an electronic device is provided, where the electronic device includes a casing and a female connector, and the female connector includes a housing, a waterproof ring, and a tongue.

The housing is formed as a cavity with two ends open, and includes a first end face, the first end face is close to a first area of the tongue, and the first area of the tongue is used to connect a male connector.

The waterproof ring is of an annular structure, is assembled on the first end face, and includes an outer end face that is not in contact with the housing. The outer end face fits the casing in a sealed manner.

The tongue is arranged inside the cavity of the housing, and in a direction extending from one end of the housing to the other end, the tongue penetrates the housing and the waterproof ring.

Therefore, according to the electronic device provided in this embodiment of this application, the waterproof ring is arranged between the housing of the female connector and the casing of the electronic device, and the waterproof ring is assembled on the first end face of the housing of the female connector that is close to the area of the tongue for electrically connecting the male connector, so that the outer end face of the waterproof ring that is not in contact with the housing fits the casing of the electronic device in a sealed manner, so as to implement end face sealing. On one hand, through the end face sealing between the outer end face of the waterproof ring and the casing of the electronic device, a gap between the first end face of the housing of the female connector and the casing of the electronic device may be sealed, so as to prevent water from seeping into an interior of the electronic device, thereby improving waterproof performance of the electronic device. On the other hand, because the waterproof ring can be directly assembled on the first end face of the housing of the female connector, it is unnecessary to form a waterproof ring that is sleeved on a side surface of the housing through injection molding by using a mold. First, costs caused by complexity of a process of forming the waterproof ring through injection molding may be reduced. Second, a problem that the waterproof performance of the electronic device is relatively low due to abnormality of the mold may be avoided as much as possible. Third, in comparison with a structure in which radial sealing is implemented between a side surface of the waterproof ring and the casing of the electronic device, the end face sealing implemented between the outer end face of the waterproof ring and the casing of the electronic device can reduce a size of the female connector in a thickness direction, thereby reducing a size of the electronic device in a thickness direction, and helping reduce a size of a socket arranged on the electronic device in a thickness direction.

Optionally, the first end face is provided with a groove, the waterproof ring includes a first part and a second part, the first part is inserted into the groove, the second part is exposed outside the groove, and the second part includes the outer end face.

Optionally, an adhesive layer is arranged between the first part and the groove, and the adhesive layer is separately attached to a surface of the first part and a surface of the groove.

Optionally, the waterproof ring includes an inner end face, the inner end face is a stepped surface, and the inner end face includes an inner stepped surface and an outer stepped surface; the inner stepped surface is an end face of the first part that is in contact with a bottom surface of the groove, the outer stepped surface is an end face of the second part that is in contact with the first end face, and an area of the outer end face is greater than an area of the inner stepped surface.

Optionally, the female connector further includes a metal member, and the metal member is fixedly connected to the housing.

Optionally, the metal member includes an embedded part and an exposed part, the embedded part is embedded into the housing and extends in a direction away from the first end face of the housing, and the exposed part is located at two ends of the embedded part and bent toward the inside of the cavity of the housing to form a snap-in structure.

The tongue includes a stopper member, and the stopper member is stuck in the exposed part.

Optionally, the metal member is made of steel.

Optionally, the housing is made of plastic.

Optionally, the waterproof ring is made of silica gel.

According to a third aspect, a method for manufacturing a female connector is provided, where the method includes:
forming a housing that has a cavity structure with two ends open;
fixedly connecting a tongue and the housing, where in a direction extending from one end of the housing to the other end, the tongue penetrates the housing; and
assembling a waterproof ring on a first end face of the housing, where the waterproof ring includes an outer end face that is not in contact with the housing, the outer end face is used to fit a casing of an electronic device on which the female connector is mounted in a sealed manner, the first end face is close to a first area of the tongue, the first area of the tongue is used to connect a male connector, and the waterproof ring is of an annular structure.

Optionally, the first end face is provided with a groove; and
the assembling a waterproof ring on a first end face of the housing includes:
assembling the waterproof ring on the groove, so that a first part of the waterproof ring is inserted into the groove, a second part is exposed outside the groove, and the second part includes the outer end face.

### BRIEF DESCRIPTION OF DRAWINGS

FIG. 1 is a schematic structural diagram of an electronic device according to an embodiment of this application;
FIG. 2 is a schematic structural diagram of a female connector according to an embodiment of this application;
FIG. 3 is a schematic structural diagram of a female connector on a yz plane according to an embodiment of this application;
FIG. 4(a) is a three-dimensional schematic structural diagram of a structure after assembly of a female connector and a casing according to an embodiment of this application;
FIG. 4(b) is a schematic structural diagram of a casing of an electronic device provided with a female connector on an xz plane according to an embodiment of this application;
FIG. 5(a) is a three-dimensional schematic structural diagram of a housing according to an embodiment of this application;
FIG. 5(b) is another three-dimensional schematic structural diagram of a housing according to an embodiment of this application;
FIG. 5(c) is a schematic structural diagram of a housing on a yz plane according to an embodiment of this application;
FIG. 5(d) is a schematic structural diagram of a housing on an xz plane according to an embodiment of this application;
FIG. 6(a) is a three-dimensional schematic structural diagram of a tongue according to an embodiment of this application;
FIG. 6(b) is a three-dimensional schematic structural diagram of a terminal assembly according to an embodiment of this application;
FIG. 6(c) is a three-dimensional schematic structural diagram of an insulating body according to an embodiment of this application;
FIG. 7(a) is a three-dimensional schematic structural diagram of a waterproof ring according to an embodiment of this application;
FIG. 7(b) is a schematic structural diagram of a waterproof ring on a yz plane according to an embodiment of this application;
FIG. 7(c) is a cross-sectional view of a local area B of a waterproof ring on a yz plane according to an embodiment of this application;
FIG. 7(d) is a cross-sectional view of a local area B of another waterproof ring on a yz plane according to an embodiment of this application;
FIG. 8 is a cross-sectional view of a local area B of another waterproof ring on a yz plane according to an embodiment of this application;
FIG. 9(a) is another three-dimensional schematic structural diagram of a housing according to an embodiment of this application;
FIG. 9(b) is a schematic structural diagram of a housing on a yz plane according to an embodiment of this application;
FIG. 10 is a schematic structural diagram of a local area A of a female connector on a yz plane according to an embodiment of this application;
FIG. 11(a) is still another three-dimensional schematic structural diagram of a female connector according to an embodiment of this application;
FIG. 11(b) is a schematic structural diagram of a female connector on a yz plane according to an embodiment of this application;
FIG. 12(a) is a three-dimensional schematic structural diagram of a metal member according to an embodiment of this application;
FIG. 12(b) and FIG. 12(c) are each a three-dimensional schematic structural diagram of a structure after assembly of a housing and a metal member according to an embodiment of this application;
FIG. 12(d) is a schematic structural diagram of a structure after assembly of a housing and a metal member on a yz plane according to an embodiment of this application;
FIG. 12(e) and FIG. 12(f) are each a three-dimensional schematic structural diagram of a tongue according to an embodiment of this application;
FIG. 12(g) is a schematic structural diagram of a female connector on a yz plane according to an embodiment of this application;
FIG. 13 is a schematic flowchart of a method for manufacturing a female connector according to an embodiment of this application; and
FIG. 14 is a schematic diagram of assembling a waterproof ring on a housing according to an embodiment of this application.

### DESCRIPTION OF EMBODIMENTS

The following describes technical solutions of this application with reference to accompanying drawings.

A female connector in embodiments of this application is applicable to any type of connector, which is not limited in the embodiments of this application. For example, the female connector may be of Type-C, Type-A, Type-B, or the like.

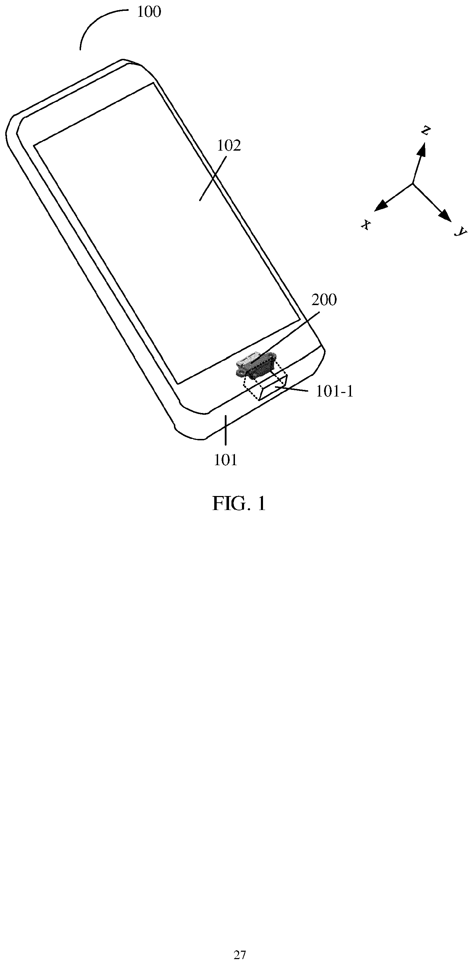

The female connector is arranged in an electronic device, and the electronic device may be a variety of possible devices on which the female connector is mounted. For example, the electronic device may be a mobile phone, a tablet computer, a watch, a wearable device, or the like. FIG. 1 is a three-dimensional schematic structural diagram of an electronic device according to an embodiment of this application. Referring to FIG. 1, the electronic device 100 includes a casing 101, a socket 101-1 arranged on the casing 101, and a female connector 200 mounted on the casing 101. Optionally, the electronic device 100 further includes a screen 102. For example, if the electronic device is a mobile phone, the casing 101 may be understood as a middle frame or a rear casing of the mobile phone.

A male connector connected to an external device is inserted into the female connector 200 through the socket 101-1, so as to implement connection between the external device and the electronic device. In this way, the external device is configured to charge the electronic device, or the external device performs data transmission with the electronic device.

The female connector is mounted on the electronic device. After the electronic device is immersed in water, water may enter an interior of the electronic device through the socket arranged on the electronic device, causing damage to the electronic device.

Based on this, an embodiment of this application provides a female connector. The female connector includes a housing, a tongue, and a waterproof ring. The waterproof ring is assembled on an end face of the housing of the female connector, and an end face of the waterproof ring fits a casing of an electronic device in a sealed manner, so as to seal a gap between the housing of the female connector and the casing of the electronic device. This can prevent water from seeping into an interior of the electronic device, thereby improving waterproof performance of the electronic device.

For ease of description, a manner of sealing between the end face of the housing of the female connector and the casing may be referred to as end face sealing.

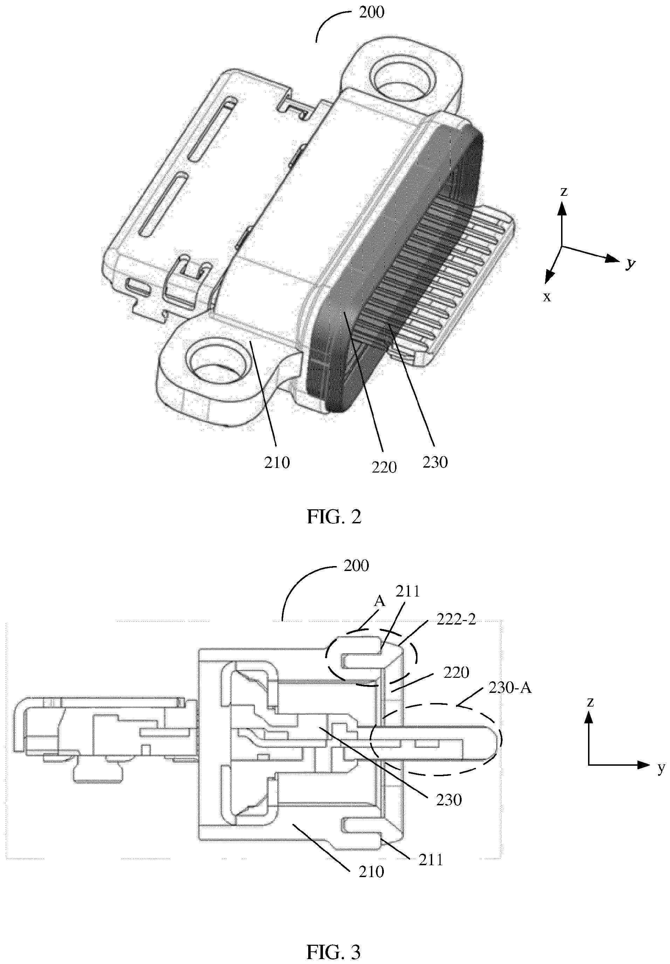

The following describes in detail the female connector in this embodiment of this application with reference to FIG. 2 to FIG. 12.

First, coordinate systems of the accompanying drawings in the embodiments of this application are described. A y direction may be understood as a length direction of the tongue of the female connector, or the y direction may alternatively be understood as a direction extending from one end of the housing of the female connector to another end. A z direction may be understood as a thickness direction or a height direction of the female connector, or the z direction may alternatively be understood as a thickness direction of an electronic device on which the female connector is mounted. An x direction is perpendicular to both the y direction and the z direction.

The embodiments of this application relate to end faces of some members (for example, a waterproof ring or a housing). The end faces may be understood as surfaces of both ends of a cylindrical structure. The cylindrical structure may be a structure having a regular shape, for example, the cylindrical structure is a cylinder or a circular cylinder. The cylindrical structure may alternatively be a structure having an irregular shape. This is not limited in the embodiments of this application.

Referring to FIG. 2 and FIG. 3, the female connector 200 includes a housing 210, a waterproof ring 220, and a tongue 230.

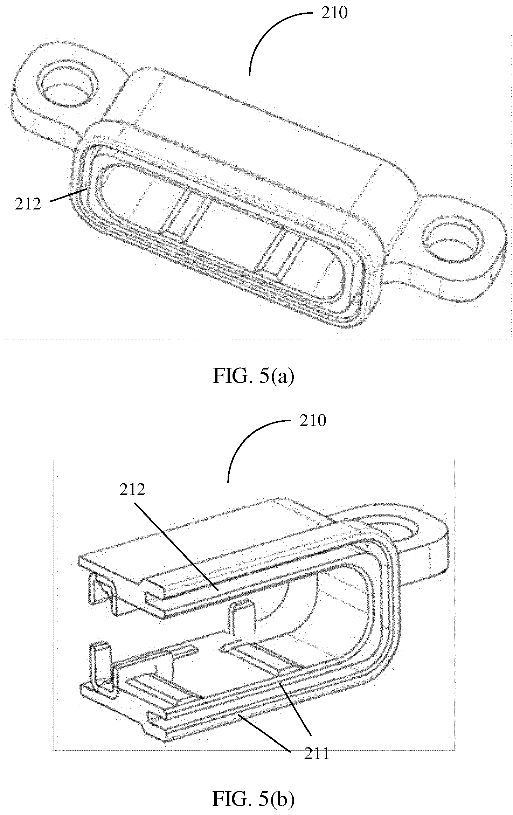

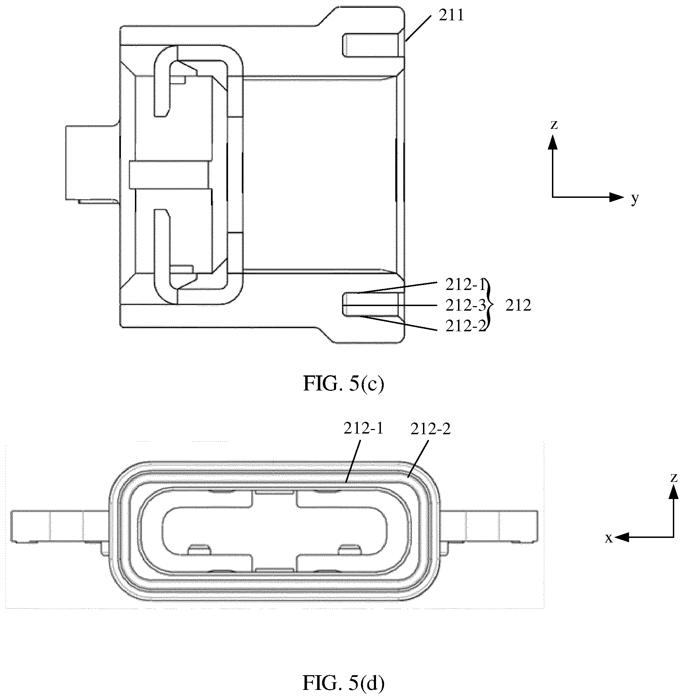

Referring to FIG. 5, the housing 210 is formed as a cavity structure with two ends open, the housing 210 includes a first end face 211 (as shown in FIG. 5(b) and FIG. 5(c)), and the first end face 211 is perpendicular to the y direction. Still referring to FIG. 3, the first end face 211 of the housing 210 is close to a first area 230-A of the tongue 230, and the first area 230-A is used to connect a male connector. Alternatively, the first area 230-A may be understood as an area for inserting or removing a male connector. It should be noted that the first end face 211 may not be perpendicular to the y direction, but may form a specific included angle with the y direction.

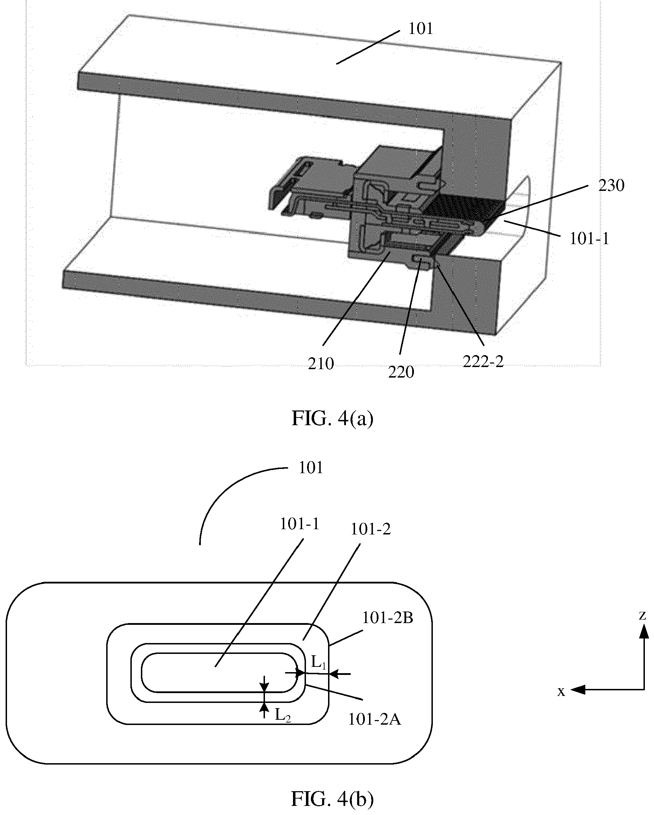

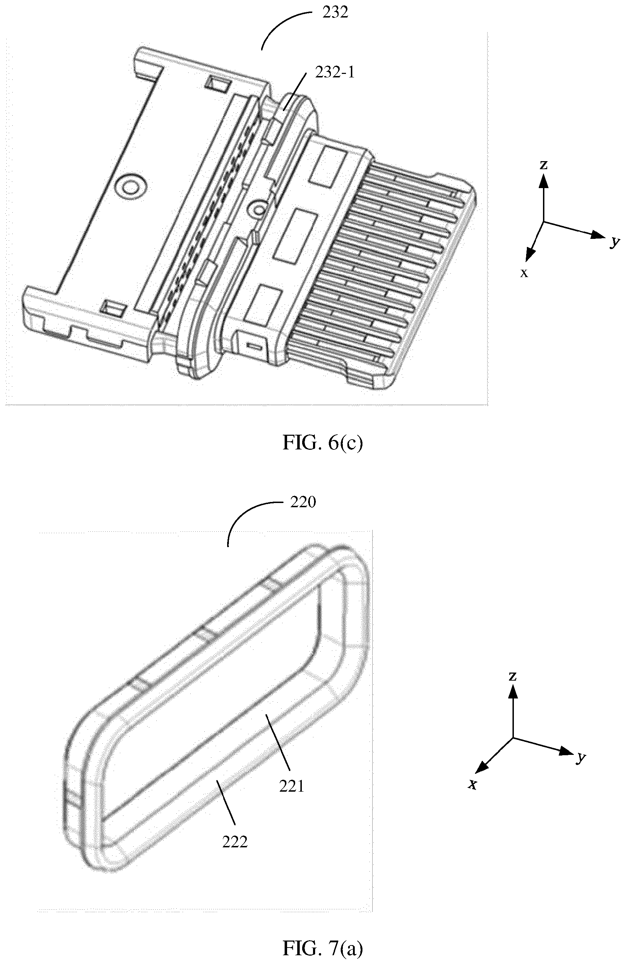

Referring to FIG. 7(a), the waterproof ring 220 is of an annular structure. Still referring to FIG. 3, the waterproof ring 220 is assembled on the first end face 211 of the housing 210 of the female connector 200, and the waterproof ring 220 includes an outer end face 222-2 that is not in contact with the housing 210. Referring to FIG. 4, the outer end face 222-2 is used to fit the casing 101 of the electronic device in a sealed manner, so as to achieve waterproof performance of the electronic device. Correspondingly, an end face of the waterproof ring 220 that is in contact with the housing 210 of the female connector 200 may be referred to as an inner end face of the waterproof ring 220 (for details, refer to related descriptions below).

It should be understood that the waterproof ring 220 may be of an annular structure of any shape, which is not limited herein. For example, the annular structure may be a circular annular structure, an elliptical structure, a rectangular structure, or the like.

For example, the fit between the outer end face 222-2 of the waterproof ring 220 and the casing 101 of the electronic device in a sealed manner may be an interference fit.

For example, still referring to FIG. 4, a sealing area between the outer end face 222-2 of the waterproof ring 220 and the casing 101 of the electronic device is described. The casing 101 of the electronic device is provided with the socket 101-1 for accommodating the tongue 230, and an annular area 101-2 of the casing 101 fits the outer end face 222-2 of the waterproof ring 220 in a sealed manner (as shown in FIG. 4(b)), so as to implement end face sealing. A distance Li between an inner edge 101-2A and an outer edge 101-2B of the annular area 101-2 of the casing 101 may be understood as a distance between an inner edge and an outer edge of projection of the outer end face 222-2 of the waterproof ring 220 on the xz plane. The projection of the outer end face 222-2 of the waterproof ring 220 on the xz plane is a ring, and the projection of the ring includes the inner edge and the outer edge. For example, if the projection of the ring is a circular ring, a radius of an inner edge of the circular ring may be referred to as an inner diameter of the circular ring, a radius of an outer edge of the circular ring may be referred to as an outer diameter of the circular ring, and a difference between the outer diameter and the inner diameter is a distance between the inner edge and the outer edge of the circular ring.

For example, to facilitate sealing between the outer end face 222-2 of the waterproof ring 220 and the casing 101, a distance L₂ may be spaced between the socket 101-1 and the inner edge 101-2A of the annular area 101-2.

Optionally, the waterproof ring 220 may be a silicone ring. In other words, the waterproof ring 220 is made of silica gel.

Referring to FIG. 2, the tongue 230 is arranged inside the housing 210, and in a direction extending from one end of the housing 210 to the other end (that is, the y direction), the tongue 230 penetrates the housing 210 and the waterproof ring 220.

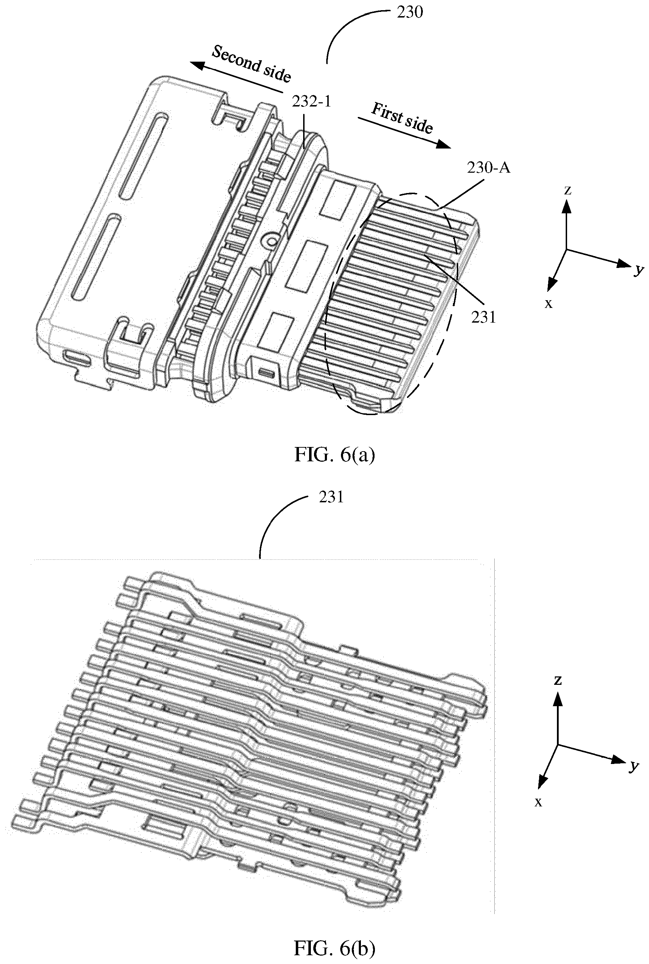

For example, referring to FIG. 6, the tongue 230 (as shown in FIG. 6(a)) includes a terminal assembly 231 (as shown in FIG. 6(b)) and an insulating body 232 (as shown in FIG. 6(c)). The terminal assembly 231 and the insulating body 232 may be integrally injection molded to form the tongue 230. The insulating body 232 is provided with a stopper member 232-1, and the stopper member 232-1 can cooperate with the housing 210 to fix the tongue 230 on the housing 210.

It may be understood that the stopper member 232-1 is a part for defining an area in the terminal assembly 231 that is electrically connected to the male connector. Referring to FIG. 6(a), the stopper member 232-1 may divide the tongue 230 into two areas. An area on a first side of the stopper member 232-1 may be understood as a head area of the tongue 230. The part of the terminal assembly 231 in the head area of the tongue 230 is used for electrical connection to the male connector, and this part is located in a first area 230-A of the tongue 230. An area on a second side of the stopper member 232-1 may be understood as a tail area of the tongue 230, and the tail area includes an area in the terminal assembly 231 for soldering on a printed circuit board (printed circuit board, PCB).

In a currently known female connector, in a process of forming the female connector, a housing of the female connector is placed into a mold, and a liquid waterproof material (for example, liquid waterproof silica gel) is sleeved on a side surface of the housing through injection molding to form a waterproof ring. A side surface of the waterproof ring fits a casing of an electronic device in a sealed manner, so as to implement radial sealing between the side surface of the housing of the female connector and the casing of the electronic device. In the female connector, because the waterproof ring is injection molded by placing the housing of the female connector into the mold, on one hand, costs for implementing a process are increased, and on the other hand, if the mold is abnormal, for example, the mold is damaged or a size error occurs, a precision error of the housing of the female connector plus a precision error of the mold greatly affect precision of the size of the waterproof ring, thereby affecting the fit between the waterproof ring and the casing of the electronic device in a sealed manner, and degrading waterproof performance of the electronic device.

Therefore, according to the female connector provided in this embodiment of this application, the waterproof ring is arranged between the housing of the female connector and the casing of the electronic device, and the waterproof ring is assembled on the first end face of the housing of the female connector that is close to the area of the tongue for electrically connecting the male connector, so that the outer end face of the waterproof ring that is not in contact with the housing fits the casing of the electronic device in a sealed manner, so as to implement end face sealing. On one hand, through the end face sealing between the outer end face of the waterproof ring and the casing of the electronic device, a gap between the first end face of the housing of the female connector and the casing of the electronic device may be sealed, so as to prevent water from seeping into an interior of the electronic device, thereby improving waterproof performance of the electronic device. On the other hand, because the waterproof ring can be directly assembled on the first end face of the housing of the female connector, it is unnecessary to form a waterproof ring that is sleeved on a side surface of the housing through injection molding by using a mold. First, costs caused by complexity of a process of forming the waterproof ring through injection molding may be reduced. Second, a problem that the waterproof performance of the electronic device is relatively low due to abnormality of the mold may be avoided as much as possible. Third, in comparison with a structure in which radial sealing is implemented between a side surface of the waterproof ring and the casing of the electronic device, the end face sealing implemented between the outer end face of the waterproof ring and the casing of the electronic device can reduce a size of the female connector in a thickness direction, thereby reducing a size of the electronic device in a thickness direction, and helping reduce a size of a socket arranged on the electronic device in a thickness direction.

In this embodiment of this application, there are a plurality of structures in which the waterproof ring is assembled on the first end face of the housing. Based on the structure in which the waterproof ring is assembled on the first end face of the housing, for example, the following describes in detail the waterproof ring, the housing, and a specific structure in which the waterproof ring is assembled on the first end face of the housing.

### Structure 1

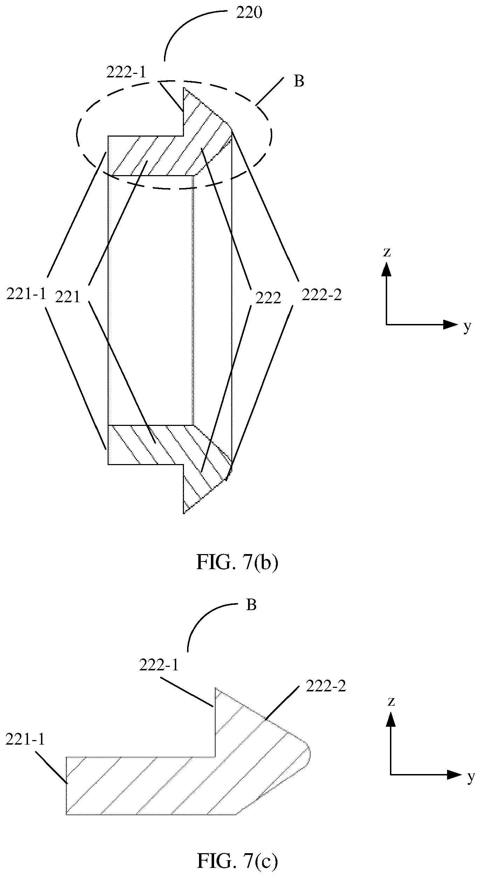

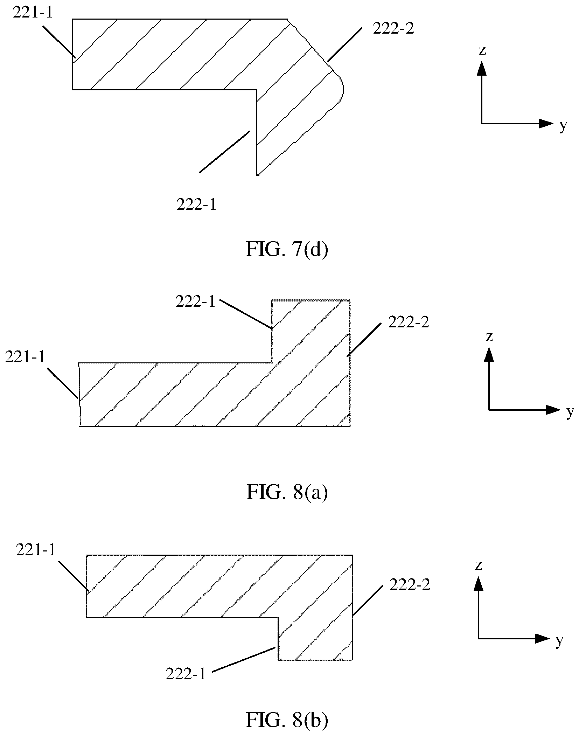

To facilitate positioning of the waterproof ring, still referring to FIG. 2 to FIG. 5, and FIG. 7 to FIG. 9, in a possible implementation, the first end face 211 of the housing 210 is provided with a groove 212 (as shown in FIG. 5(a) and FIG. 5(b)). The waterproof ring 220 includes a first part 221 and a second part 222 (as shown in FIG. 7(a) and FIG. 7(b) and FIG. 8(b)). The first part 221 of the waterproof ring 220 is inserted into the groove 212, the second part 222 of the waterproof ring 220 is exposed outside the groove 212, and the second part 222 includes an outer end face 222-2 (as shown in FIG. 3).

Still referring to FIG. 5(a) and FIG. 5(b), the groove 212 may be an annular groove 212 arranged on the first end face 211 of the housing 210 of the female connector 200. Still referring to FIG. 5(c) and FIG. 5(d), the groove 212 includes a side surface 212-1, a side surface 212-2, and a bottom surface 212-3. Space formed by these three surfaces forms the groove 212, and is used for accommodating the first part 221 of the waterproof ring 220.

Therefore, the first end face of the housing of the female connector is provided with the groove, and the waterproof ring is inserted into the groove. On one hand, the waterproof ring can be well positioned, and the waterproof ring can be easily fixed, thereby preventing the waterproof ring from being dislocated or detached from the first end face of the housing. On the other hand, water may seep into the electronic device through an area in which the waterproof ring is in contact with the housing, and through arrangement of the groove, the waterproof ring is inserted into the groove, and the groove is in contact with the waterproof ring. This may increase a contact area between the waterproof ring and the housing, and increase a distance that water passes through. For example, water needs to pass through the side surface (for example, the side surface 212-1) of the groove close to the cavity of the housing, the bottom surface (212-3) of the groove, and the side surface (for example, the side surface 212-2) of the groove away from the cavity of the housing, so as to finally enter an interior of the electronic device. This makes it difficult for water to seep into the electronic device, thereby improving waterproof stability of the electronic device and improving a waterproof effect of the electronic device.

The waterproof ring 220 may be a structure of various shapes.

Still referring to FIG. 7 and FIG. 8, in a possible implementation, the waterproof ring 220 may be arranged as a stepped waterproof ring. FIG. 7(b) is used as an example. The waterproof ring 220 includes an inner end face, the inner end face is a stepped surface, and the inner end face includes an inner stepped surface 221-1 and an outer stepped surface 222-1. The inner stepped surface 221-1 is an end face that is in contact with the bottom surface 212-3 of the groove 212, the outer stepped surface 222-1 is an end face that is in contact with the first end face 211 of the housing 210, and an area of the outer end face 222-2 is greater than an area of the inner stepped surface 221-1.

Referring to FIG. 7(c) and FIG. 8(a), in the z direction, the outer stepped surface 222-1 is farther from the tongue 230 than the inner stepped surface 221-1. Referring to FIG. 7(d) and FIG. 8(b), the outer stepped surface 222-1 is closer to the tongue 230 than the inner stepped surface 221-1.

In some cases, an overall thickness of the electronic device needs to be small. As a result, a thickness of the female connector is also small, leading to a small size of the groove in the z direction, and a small area of the end face of the waterproof ring that is in contact with the bottom surface of the groove is small. Using the waterproof ring of a stepped shape may ensure that the area of the outer end face of the waterproof ring is greater than the area of the end face of the waterproof ring that is in contact with the bottom surface of the groove, thereby increasing the sealing area between the outer end face of the waterproof ring and the casing of the electronic device, and improving a sealing effect.

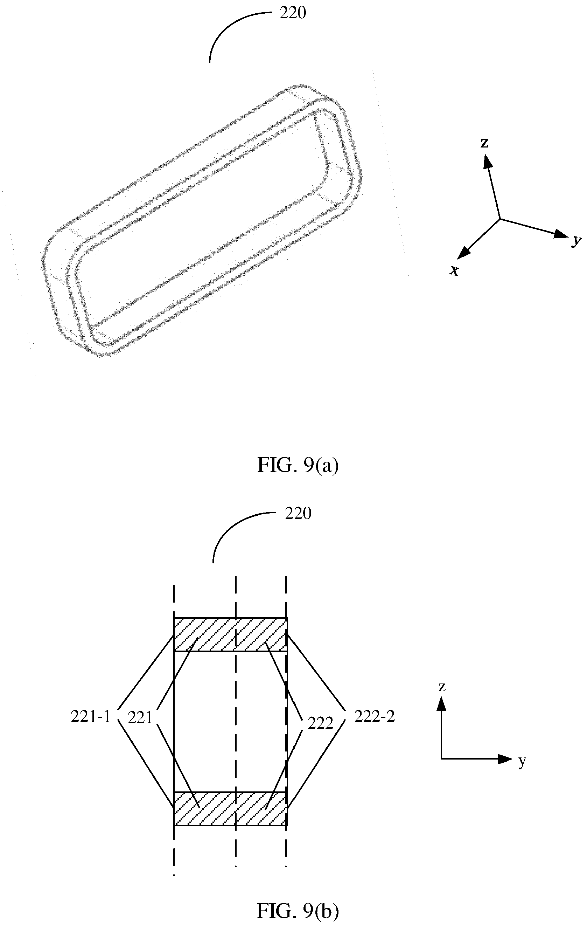

Referring to FIG. 9(a) and FIG. 9(b), in another possible implementation, a cross section of the waterproof ring 220 on a first plane (that is, the yz plane) may be square. The waterproof ring 220 includes a first part 221 and a second part 222, and the waterproof ring 220 includes an inner end face 221-1 and an outer end face 222-2. The inner end face 221-1 may be an end face of the first part 221 and is in contact with the bottom surface 212-3 of the groove 212. The outer end face 222-2 may be an end face of the second part 222, and is not in contact with the housing 210. The outer end face 222-2 is used to implement end face sealing with the casing 101 of the electronic device.

The structure may be well applied to a case in which there is no special requirement for the thickness of the electronic device, and various waterproof rings that meet the thickness requirement may be designed. The process is simple and easy to operate.

In addition, the shape of the outer end face 222-2 of the waterproof ring 220 is not limited in this embodiment of this application. For example, still referring to FIG. 7, the outer end face 222-2 of the waterproof ring 220 may be curved. Optionally, the cross section of the outer end face 222-2 on the yz plane may be, for example, a constricted shape shown in FIG. 7(b). For another example, still referring to FIG. 8, the outer end face 222-2 of the waterproof ring 220 may alternatively be planar.

It should be understood that structures of the stepped waterproof rings shown in FIG. 7 and FIG. 8 are merely examples for description, and should not constitute a limitation on this embodiment of this application. Any structure of the stepped waterproof ring falls within the protection scope of this embodiment of this application.

Therefore, according to the female connector in this embodiment of this application, the stepped waterproof ring is arranged, so that an area of the outer end face of the waterproof ring is greater than an area of the inner stepped surface that is in contact with the bottom surface of the groove, thereby increasing a sealing area between the outer end face of the waterproof ring and the casing of the electronic device, improving a sealing effect, and further improving the waterproof performance of the electronic device.

In the foregoing structure in which the first end face of the housing is provided with the groove, there may be a gap between the first part of the waterproof ring inserted into the groove and the groove. This possible gap is also a way for water to seep into the electronic device. Therefore, to seal this possible gap, an embodiment of this application further provides the following structure to further improve the sealing effect.

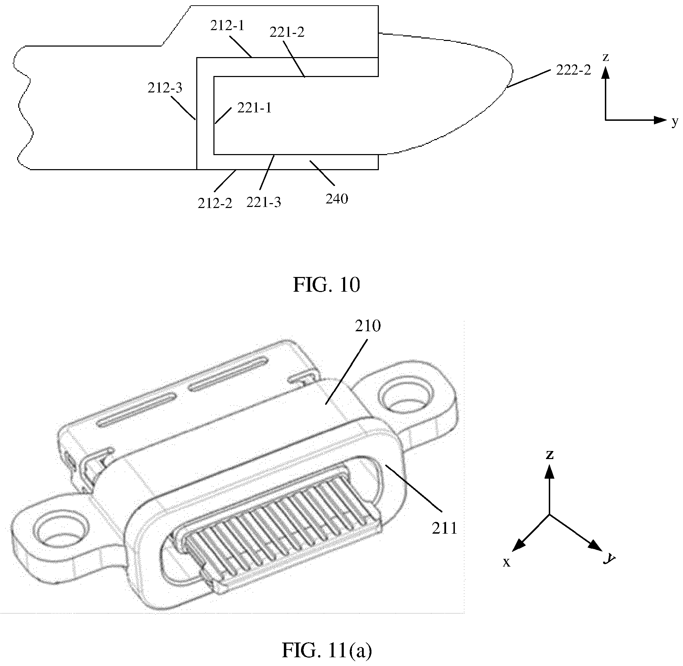

FIG. 10 is a schematic structural diagram of a local area A of a female connector on a yz plane. For the local area A, refer to the markings in FIG. 3. The local area A may be understood as an area in which the groove and the waterproof ring cooperate with each other.

Referring to FIG. 10, in a possible implementation, an adhesive layer 240 is arranged between the first part 221 of the waterproof ring 220 and the groove 212, and the adhesive layer 240 is separately attached to a surface of the first part 221 and a surface of the groove 212.

The surface of the groove 212 includes side surfaces 212-1 and 212-2 and a bottom surface 212-3 of the groove 212, and the surface of the first part 221 of the waterproof ring 220 includes an inner end face 221-1 and side surfaces 221-2 and 221-3.

In the process of manufacturing the female connector, glue may be dispensed on the bottom surface 212-3 of the groove 212, and the inner end face 221-1 of the first part 221 of the waterproof ring 220 is squeezed on the bottom surface 212-3 of the groove 212, so that the glue is squeezed between that groove 212 and the first part 221 of the waterproof ring 220 to form the adhesive layer 240 between the first part 221 of the waterproof ring 220 and the groove 212.

Therefore, the adhesive layer attached to the groove and the first part is arranged between the first part of the waterproof ring and the groove, so that a gap between the groove and the first part of the waterproof ring can be effectively sealed, thereby further improving a waterproof effect of the electronic device. In addition, the adhesive layer can further improve adhesion between the waterproof ring and the groove, so that the waterproof ring can be better stuck in the groove.

In another possible implementation, to seal the gap between the groove 212 and the first part 221 of the waterproof ring 220, the first part 221 of the waterproof ring 220 may be inserted into the groove 212 in an interference fit manner. For example, a size of the groove 212 in the z direction is 1 cm, a size of the first part 221 of the waterproof ring 220 in the z direction may be 1.1 cm. Because 1.1 cm is greater than 1 cm, the first part 221 of the waterproof ring 220 is inserted into the groove 212 in an interference fit manner to effectively seal the gap.

The structure in which the first part of the waterproof ring is inserted into the groove in an interference fit manner can be well applied to a case in which the sizes of the groove and the waterproof ring are relatively large in the z direction, and the gap between the groove and the waterproof ring can be sealed without affecting the performance of the waterproof ring.

### Structure 2

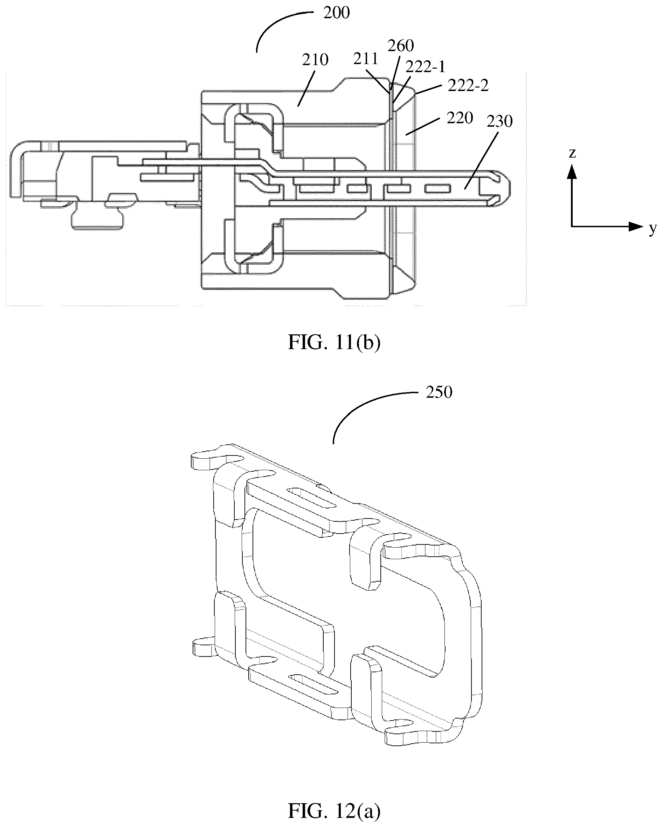

In this structure, there is no need to arrange a groove on the first end face 211 of the housing 210. Referring to FIG. 11, an adhesive layer 260 may be provided between the inner end face 222-1 of the waterproof ring 220 and the first end face 211 of the housing 210. The adhesive layer 260 is separately attached to the inner end face 222-1 of the waterproof ring 220 and the first end face 211 of the housing 210.

The waterproof ring 220 may alternatively be assembled on the first end face 211 of the housing 210 by bonding the adhesive layer to the inner end face of the waterproof ring and the first end face of the housing, so as to implement the end face sealing between the outer end face 222-2 of the waterproof ring and the casing 101.

For example, an adhesive material of the adhesive layer 260 may be ultraviolet curing (ultraviolet curing, UV) paint. In the process of assembling the waterproof ring 220 on the first end face 211 of the housing 210 of the female connector, UV glue may be coated on the first end face 211 to form the adhesive layer 260 through ultraviolet curing, so that the inner end face 222-1 of the waterproof ring 220 and the first end face 211 of the housing 210 are bonded together.

It should be understood that the structure 1 and the structure 2 are merely examples for description, and should not constitute a limitation on this embodiment of this application. Any structure in which a waterproof ring can be assembled on the first end face of the housing falls within the protection scope of this embodiment of this application.

In a process of implementing data transmission or charging by using the female connector, because the male connector is metallic, if the housing of the female connector is also a metal housing, the metal of the male connector and the metal of the housing may generate electromagnetic waves. When an antenna is arranged at a position close to the female connector, electromagnetic waves generated by the female connector may affect antenna performance.

Therefore, optionally, the housing 210 may be a plastic housing. In other words, the housing 210 is made of plastic.

Therefore, the housing of the female connector is arranged as a plastic housing. In a process of implementing data transmission or charging by using the female connector, electromagnetic waves generated by the metal housing and the male connector may be avoided, so as to reduce impact on antenna performance and improve antenna performance of the electronic device.

The housing of the female connector is configured to support the tongue. To increase the strength of the housing, a metal member fixed to the housing may be arranged in the housing. This structure may be well applied to a case in which the housing is designed as a plastic housing.

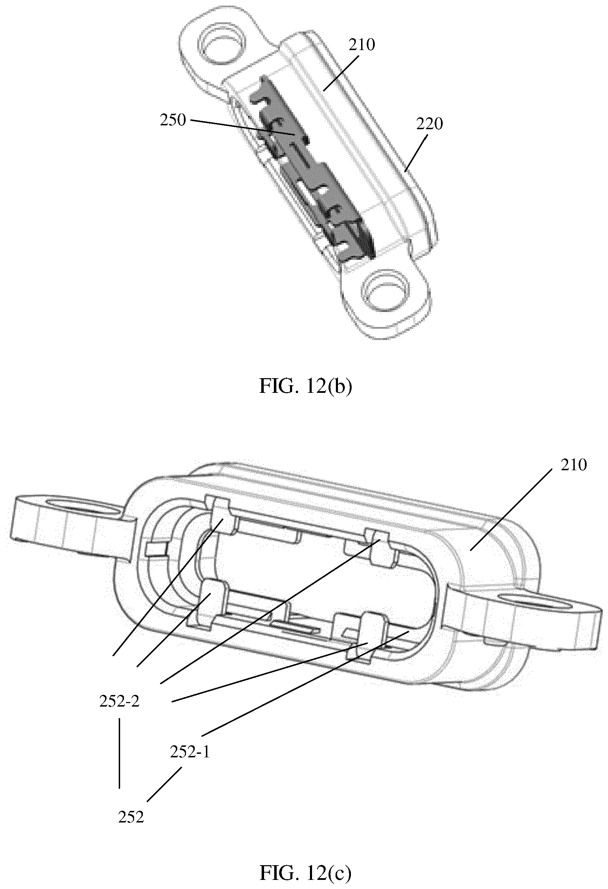

For example, referring to FIG. 12(a), the female connector further includes a metal member 250; referring to FIG. 12(b), the metal member 250 is fixedly connected to the housing 210. According to the invention, the metal member 250 and the housing 210 are integrally molded through injection molding.

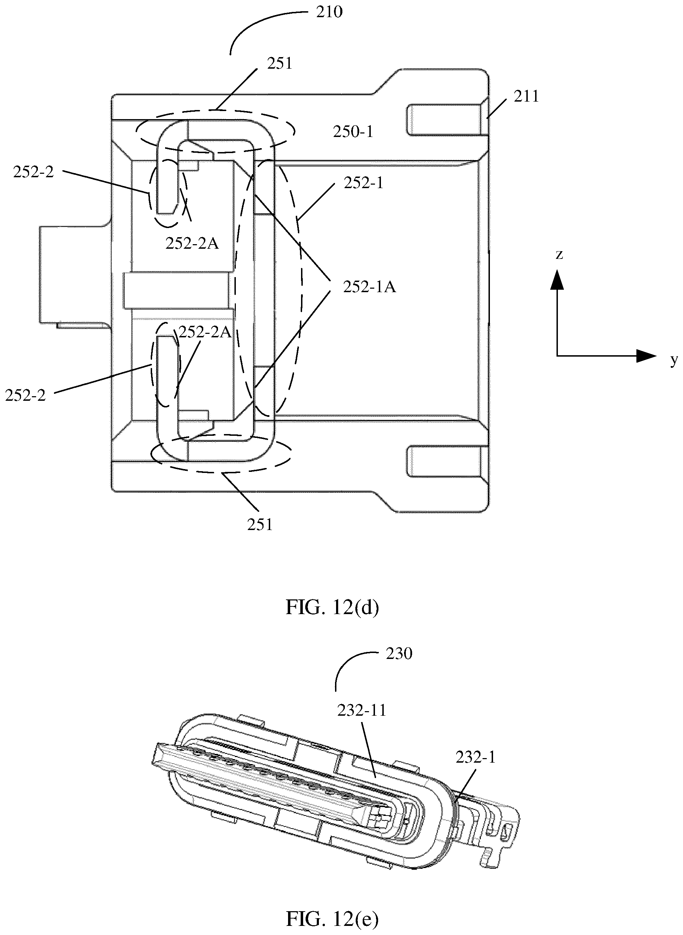

Referring to FIG. 12(c) and FIG. 12(d), the metal member 250 includes an embedded part 251 and an exposed part 252. The embedded part 251 of the metal member 250 is embedded in the housing 210 and extends in a direction away from the first end face 211 of the housing 210. The exposed parts 252 of the metal member 250 are located at both ends of the embedded part 251, are bent toward the inside of the cavity of the housing 210, and are exposed in the cavity of the housing 210, so as to form a snap-in structure, so that the tongue 230 can be stuck on the metal member 250.

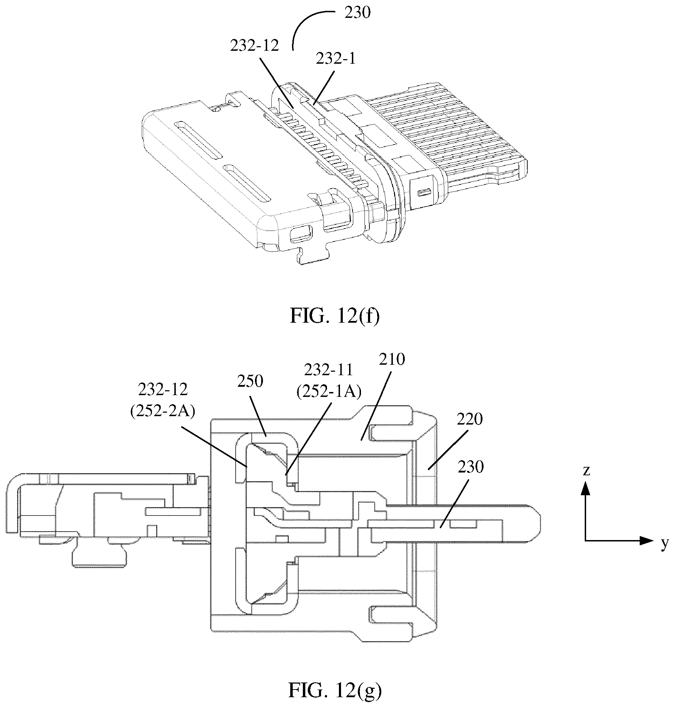

Referring to FIG. 12(e) and FIG. 12(f), the tongue 230 may be stuck in the exposed part 252 of the metal member 250 by using the stopper member 232-1 of the tongue 230. According to the invention, still referring to FIG. 12(c) and FIG. 12(d), the exposed part 252 of the metal member 250 includes a front end portion 252-1 and a rear end portion 252-2 that are opposite to each other, and rear end portion 252-2 is of a plurality of (for example, four) claw structures bent toward the inside of the cavity of the housing 210. The front end portion 252-1 includes a front mating end face 252-1A and the rear end portion 252-2 includes a rear mating end face 252-2A. Still referring to FIG. 12(e) and FIG. 12(f), the stopper member 232-1 of the tongue 230 includes a front end face 232-11 and a rear end face 232-12 that are opposite to each other. The front end face 232-11 of the stopper member 232-1 corresponds to the front mating end face 252-1A of the front end portion 252-1 of the exposed part 252. The rear end face 232-12 of the stopper member 232-1 corresponds to the rear mating end face 252-2A of the rear end portion 252-2 of the exposed part 252. Referring to FIG. 12(g), the front mating end face 252-1A of the exposed part 252 of the metal member 250 is in tight contact with the front end face 232-11 of the stopper member 232-1. The rear mating end face 252-2A of the exposed part 252 of the metal member 250 is in tight contact with the rear end face 232-12 of the stopper member 232-1, so that the stopper member 232-1 of the tongue 230 is stuck in the exposed part 252 of the metal member 250. Therefore, the tongue 230 may be fixed to the housing 210 by using the metal member 250.

For the metal member 250 shown in FIG. 12(a), a pre-folding groove may be arranged on the housing 210, and the rear end portion 252-2 of the exposed part 252 of the metal member 250 may not be bent before the tongue 230 is assembled. For example, the rear end portion 252-2 may be inserted into the pre-folding groove arranged in the housing 210 in the y direction, and passes the tongue 230 through the housing 210 in the y direction starting from the head area of the tongue 230, so that the tongue 230 penetrates the housing 210. After the front end face 232-11 of the stopper member 232-1 of the tongue 230 is in contact with the front mating end face 252-1A of the front end portion 252-1 of the exposed part 252 of the metal member 230, the rear end portion 252-2 of the exposed part 252 of the metal member 250 is bent toward the inside of the cavity of the housing 210 along the pre-folding groove, so that the rear mating end face 252-2A of the rear end portion 252-2 is in tight contact with the rear end face 232-12 of the stopper member 232-1 of the tongue 230, and the front mating end face 252-1A of the front end portion 252-1 of the exposed part 252 is in tight contact with the front end face 232-11 of the stopper member 232-1 of the tongue 230, so that the stopper member 232-1 of the tongue 230 is stuck in the exposed part 252.

Optionally, the metal member 150 may be made of steel.

The foregoing describes in detail the female connector in the embodiments of this application with reference to FIG. 2 to FIG. 12. The following describes in detail an electronic device on which a female connector is mounted in the embodiments of this application with further reference to FIG. 1 to FIG. 12. For example, the electronic device may be the electronic device shown in FIG. 1, and the female connector may be a female connector corresponding to the structure shown in any one of FIG. 2 to FIG. 12.

Still referring to FIG. 1 and FIG. 4(a), the electronic device includes a casing 101 and a female connector 200. The female connector 200 includes a housing 210, a waterproof ring 220, and a tongue 230.

Referring to FIG. 2 to FIG. 12, the housing 210 is formed as a cavity with two ends open. The housing 210 includes a first end face 211, the first end face 211 is close to a first area 230-A of the tongue 130, and the first area 230-A is used to connect a male connector. The waterproof ring 220 is of an annular structure, and is assembled on the first end face 211 of the housing 210. In addition, an outer end face 222-2 of the waterproof ring 220 that is not in contact with the housing 210 fits the casing 101 in a sealed manner. The tongue 230 is arranged inside the housing 210 and is fixedly connected to the housing 210. In a direction extending from one end of the housing 210 to the other end (that is, the y direction), the tongue 230 penetrates the housing 210 and the waterproof ring 220.

For specific descriptions of the members, refer to the foregoing related descriptions. For brevity, details are not described herein again.

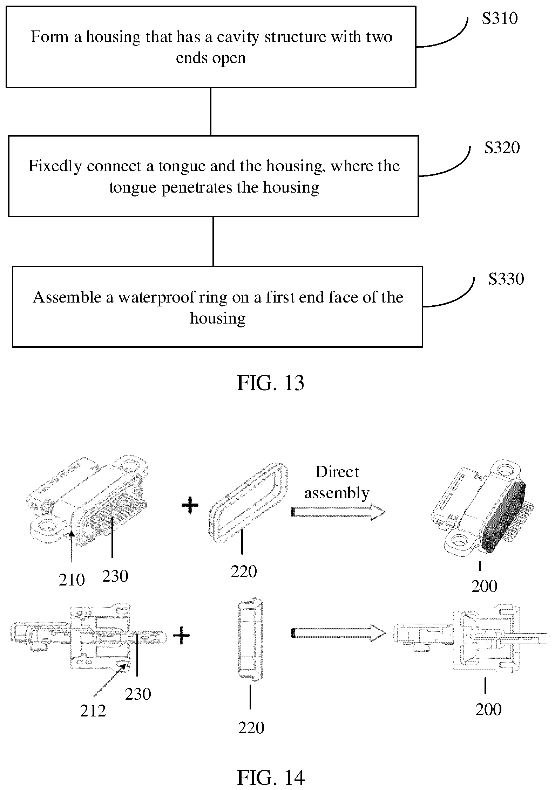

An embodiment of this application further provides a method for manufacturing a female connector. FIG. 13 is a schematic flowchart of a method for manufacturing a female connector according to an embodiment of this application. FIG. 14 is a schematic diagram of assembling a waterproof ring on a housing.

Still referring to FIG. 1 to FIG. 12 and FIG. 13, the method includes the following steps.

S310: Form a housing 210 that has a cavity structure with two ends open.

S320: Fixedly connect a tongue 230 to the housing 210, where in a direction extending from one end of the housing 210 to the other end, the tongue 230 penetrates the housing 210.

S330: Assemble a waterproof ring 220 on a first end face 211 of the housing 210, where the waterproof ring 220 includes an outer end face 222-2 that is not in contact with the housing 210, the outer end face 222-2 is used to fit a casing of an electronic device on which the female connector is mounted in a sealed manner, the first end face 211 of the housing 210 is close to a first area 230-A of the tongue 230, and the first area 230-A is used to connect a male connector.

Optionally, the first end face 211 of the housing 210 is provided with a groove 212, and the assembling a waterproof ring 220 on a first end face 211 includes:
assembling the waterproof ring 220 on the groove 212, so that a first part 221 of the waterproof ring 220 is inserted into the groove 212, and a second part 222 of the waterproof ring 220 is exposed outside the groove 212, where the second part 222 includes the outer end face 222-2.

It should be understood that, as described in the embodiments of this application, that an element is "fixed" to another element means that an element can be directly or indirectly fixed to another element. As described in the embodiments of this application, "connection" between an element and another element may be direct connection or indirect connection. As described in the embodiments of this application, "contact" between an element and another element may be direct contact or indirect contact. In addition, as described in the embodiments of this application, contact between two elements may be understood as contact within an allowable range of a mounting error, and there may be a small gap caused by the mounting error.

It should be further understood that, as described in the embodiments of this application, that a direction is "parallel to" or "perpendicular to" another direction may be understood as "approximately parallel" or "approximately perpendicular".

The of this application shall be subject to the protection scope of the claims.

## Claims

1. A female connector (200), which is suitable to be used in an electronic device (100), wherein the female connector comprises a housing (210), a waterproof ring (220), and a tongue (230), wherein
the housing (210) is formed as a cavity with two ends open, and comprises a first end face (211), and a first area (230-A) of the tongue (230) is configured to connect a male connector;
the waterproof ring (220) is of an annular structure, is assembled on the first end face (211), and comprises an outer end face (222-2) that is not in contact with the housing (210), wherein the outer end face (222-2) is configured to fit a casing (101) of the electronic device in a sealed manner; and
the tongue (230) is arranged inside the housing (210), and the tongue (230) penetrates the housing (210) and the waterproof ring (220), and the tongue (1) comprises a stopper member (232-1);
wherein the female connector further comprises a metal member (250), and the metal member is fixedly connected to the housing; **characterised in that** the metal member (250) and the housing (210) are integrally molded through injection molding;
wherein the metal member (250) comprises an embedded part (251) and an exposed part (252), the embedded part (251) is embedded into the housing (210) and extends in a direction away from the first end face (211) of the housing (210), and the exposed part (252) is located at two ends of the embedded part (251) and bent toward the inside of the cavity of the housing (210) to form a snap-in structure;
wherein the exposed part (252) includes a front end portion (252-1) and a rear end portion (252-2) that are opposite to each other, the rear end portion (252-2) is of a plurality of claw structures bent toward the inside of the cavity of the housing (210);
and the stopper member is stuck in the exposed part (252).

2. The female connector according to claim 1, wherein the front end portion (252-1) of the exposed part (252) includes a front mating end face (252-1A) and the rear end portion (252-2) of the exposed part (252) includes a rear mating end face (252-2A), and wherein a front end face (232-11) of the stopper member (232-1) corresponds to the front mating end face (252-1A), and a rear end face (232-12) of the stopper member (232-1) corresponds to the rear mating end face (252-2A).

3. The female connector according to claim 2, wherein the front mating end face (252-1A) of the exposed part (252) of the metal member (250) is in tight contact with the front end face (232-11) of the stopper member (232-1), and the rear mating end face (252-2A) of the exposed part (252) of the metal member (250) is in tight contact with the rear end face (232-12) of the stopper member (232-1), so that the stopper member (232-1) of the tongue (230) is stuck in the exposed part (252) of the metal member (250).

4. The female connector according to claim 2 or 3, the front end portion (252-1) and the rear end portion (252-2) are disposed along the length direction of the tongue of the female connector.

5. The female connector according to any one of claims 1 to 4, wherein the first end face (211) is provided with a groove (212), the waterproof ring (220) comprises a first part (221) and a second part (222), the first part (221) is inserted into the groove, the second part (222) is exposed outside the groove, and the second part (222) comprises the outer end face (222-2).

6. The female connector according to claim 5, wherein an adhesive layer (240) is arranged between the first part (221) and the groove (212), and the adhesive layer is separately attached to a surface of the first part and a surface of the groove.

7. The female connector according to claim 5 or 6, wherein the waterproof ring (210) comprises an inner end face (221-1), the inner end face is a stepped surface, and the inner end face comprises an inner stepped surface (221-1) and an outer stepped surface (222-1); the inner stepped surface is an end face of the first part (221) that is in contact with a bottom surface of the groove (212), the outer stepped surface is an end face of the second part (222) that is in contact with the first end face (211), and an area of the outer end face (222-2) is greater than an area of the inner stepped surface (221-1).

8. The female connector according to any one of claims 1 to 7, wherein the metal member is made of steel.

9. The female connector according to any one of claims 1 to 8, wherein the housing is made of plastic.

10. The female connector according to any one of claims 1 to 9, wherein the waterproof ring is made of silica gel.

11. An electronic device (100), wherein the electronic device comprises a casing (101) and a female connector (200) according to any one of claims 1 to 10.

## Patentansprüche

1. Buchse (200), die zur Verwendung in einer elektronischen Vorrichtung (100) geeignet ist, wobei die Buchse ein Gehäuse (210), einen wasserdichten Ring (220) und eine Zunge (230) umfasst, wobei
das Gehäuse (210) als Hohlraum mit zwei offenen Enden ausgebildet ist und eine erste Stirnfläche (211) umfasst, und ein erster Bereich (230-A) der Zunge (230) zum Verbinden eines Steckers konfiguriert ist;
der wasserdichte Ring (220) eine ringförmige Struktur aufweist, an der ersten Stirnfläche (211) montiert ist und eine äußere Stirnfläche (222-2) umfasst, die nicht mit dem Gehäuse (210) in Kontakt steht, wobei die äußere Stirnfläche (222-2) dazu konfiguriert ist, abgedichtet zu einem Gehäuse (101) der elektronischen Vorrichtung zu passen; und
die Zunge (230) im Inneren des Gehäuses (210) angeordnet ist und die Zunge (230) das Gehäuse (210) und den wasserdichten Ring (220) durchdringt, und die Zunge (1) ein Anschlagelement (232-1) umfasst;
wobei die Buchse ferner ein Metallelement (250) umfasst und das Metallelement fest mit dem Gehäuse verbunden ist; **dadurch gekennzeichnet, dass** das Metallelement (250) und das Gehäuse (210) durch Spritzgießen einstückig geformt sind;
wobei das Metallelement (250) einen eingebetteten Teil (251) und einen freiliegenden Teil (252) umfasst, der eingebettete Teil (251) in das Gehäuse (210) eingebettet ist und sich in eine Richtung weg von der ersten Stirnfläche (211) des Gehäuses (210) erstreckt, und der freiliegende Teil (252) an zwei Enden des eingebetteten Teils (251) angeordnet ist und in Richtung des Inneren des Hohlraums des Gehäuses (210) gebogen ist, um eine Einschnappstruktur zu bilden;
wobei der freiliegende Teil (252) einen vorderen Endabschnitt (252-1) und einen hinteren Endabschnitt (252-2) beinhaltet, die einander gegenüberliegen, und der hintere Endabschnitt (252-2) aus einer Vielzahl von Klauenstrukturen besteht, die in Richtung des Inneren des Hohlraums des Gehäuses (210) gebogen sind;
und das Anschlagelement im freiliegenden Teil (252) feststeckt.

2. Buchse nach Anspruch 1, wobei der vordere Endabschnitt (252-1) des freiliegenden Teils (252) eine vordere Steckstirnfläche (252-1A) beinhaltet und der hintere Endabschnitt (252-2) des freiliegenden Teils (252) eine hintere Steckstirnfläche (252-2A) beinhaltet, und wobei eine vordere Stirnfläche (232-11) des Anschlagelements (232-1) der vorderen Steckstirnfläche (252-1A) entspricht und eine hintere Stirnfläche (232-12) des Anschlagelements (232-1) der hinteren Steckstirnfläche (252-2A) entspricht.

3. Buchse nach Anspruch 2, wobei die vordere Steckstirnfläche (252-1A) des freiliegenden Teils (252) des Metallelements (250) in engem Kontakt mit der vorderen Stirnfläche (232-11) des Anschlagelements (232-1) steht und die hintere Steckstirnfläche (252-2A) des freiliegenden Teils (252) des Metallelements (250) in engem Kontakt mit der hinteren Stirnfläche (232-12) des Anschlagelements (232-1) steht, sodass das Anschlagelement (232-1) der Zunge (230) im freiliegenden Teil (252) des Metallelements (250) feststeckt.

4. Buchse nach Anspruch 2 oder 3, wobei der vordere Endabschnitt (252-1) und der hintere Endabschnitt (252-2) entlang der Längsrichtung der Zunge der Buchse angeordnet sind.

5. Buchse nach einem der Ansprüche 1 bis 4, wobei die erste Stirnfläche (211) mit einer Nut (212) versehen ist, der wasserdichte Ring (220) einen ersten Teil (221) und einen zweiten Teil (222) umfasst, der erste Teil (221) in die Nut eingesetzt ist, der zweite Teil (222) außerhalb der Nut freiliegt und der zweite Teil (222) die äußere Stirnfläche (222-2) umfasst.

6. Buchse nach Anspruch 5, wobei zwischen dem ersten Teil (221) und der Nut (212) eine Klebeschicht (240) angeordnet ist und die Klebeschicht separat an einer Oberfläche des ersten Teils und einer Oberfläche der Nut angebracht ist.

7. Buchse nach Anspruch 5 oder 6, wobei der wasserdichte Ring (210) eine innere Stirnfläche (221-1) umfasst, die innere Stirnfläche eine gestufte Oberfläche ist und die innere Stirnfläche eine innere gestufte Oberfläche (221-1) und eine äußere gestufte Oberfläche (222-1) umfasst; wobei die innere gestufte Oberfläche eine Stirnfläche des ersten Teils (221) ist, die mit einer Bodenoberfläche der Nut (212) in Kontakt steht, die äußere gestufte Oberfläche eine Stirnfläche des zweiten Teils (222) ist, die mit der ersten Stirnfläche (211) in Kontakt steht, und eine Fläche der äußeren Stirnfläche (222-2) größer ist als eine Fläche der inneren gestuften Oberfläche (221-1).

8. Buchse nach einem der Ansprüche 1 bis 7, wobei das Metallelement aus Stahl hergestellt ist.

9. Buchse nach einem der Ansprüche 1 bis 8, wobei das Gehäuse aus Kunststoff hergestellt ist.

10. Buchse nach einem der Ansprüche 1 bis 9, wobei der wasserdichte Ring aus Kieselgel hergestellt ist.

11. Elektronische Vorrichtung (100), wobei die elektronische Vorrichtung ein Gehäuse (101) und eine Buchse (200) nach einem der Ansprüche 1 bis 10 umfasst.

## Revendications

1. Connecteur femelle (200), qui convient pour être utilisé dans un dispositif électronique (100), dans lequel le connecteur femelle comprend un boîtier (210), un anneau étanche (220) et une languette (230), dans lequel
le boîtier (210) est formé sous la forme d'une cavité avec deux extrémités ouvertes, et comprend une première face d'extrémité (211), et une première zone (230-A) de la languette (230) est configurée pour connecter un connecteur mâle ;
l'anneau étanche (220) est d'une structure annulaire, est assemblé sur la première face d'extrémité (211) et comprend une face d'extrémité externe (222-2) qui n'est pas en contact avec le boîtier (210), dans lequel la face d'extrémité externe (222-2) est configurée pour s'adapter à un boîtier (101) du dispositif électronique de manière étanche ; et
la languette (230) est disposée à l'intérieur du boîtier (210), et la languette (230) pénètre dans le boîtier (210) et l'anneau étanche (220), et la languette (1) comprend un élément d'arrêt (232-1) ;
dans lequel le connecteur femelle comprend également un élément métallique (250), et l'élément métallique est connecté de manière fixe au boîtier ; **caractérisé en ce que** l'élément métallique (250) et le boîtier (210) sont moulés d'un seul tenant par moulage par injection ;
dans lequel l'élément métallique (250) comprend une partie encastrée (251) et une partie exposée (252), la partie encastrée (251) est encastrée dans le boîtier (210) et s'étend dans une direction opposée à la première face d'extrémité (211) du boîtier (210), et la partie exposée (252) est située aux deux extrémités de la partie encastrée (251) et pliée vers l'intérieur de la cavité du boîtier (210) pour former une structure encliquetable ;
dans lequel la partie exposée (252) comporte une partie d'extrémité avant (252-1) et une partie d'extrémité arrière (252-2) qui sont opposées l'une à l'autre, la partie d'extrémité arrière (252-2) est constituée d'une pluralité de structures à griffes courbées vers l'intérieur de la cavité du boîtier (210) ;
et l'élément d'arrêt est coincé dans la partie exposée (252).

2. Connecteur femelle selon la revendication 1, dans lequel la partie d'extrémité avant (252-1) de la partie exposée (252) comporte une face d'extrémité avant correspondante (252-1A) et la partie d'extrémité arrière (252-2) de la partie exposée (252) comporte une face d'extrémité arrière correspondante (252-2A), et dans lequel une face d'extrémité avant (232-11) de l'élément d'arrêt (232-1) correspond à la face d'extrémité avant correspondante (252-1A), et une face d'extrémité arrière (232-12) de l'élément d'arrêt (232-1) correspond à la face d'extrémité arrière correspondante (252-2A).

3. Connecteur femelle selon la revendication 2, dans lequel la face d'extrémité avant correspondante (252-1A) de la partie exposée (252) de l'élément métallique (250) est en contact étroit avec la face d'extrémité avant (232-11) de l'élément d'arrêt (232-1), et la face d'extrémité arrière correspondante (252-2A) de la partie exposée (252) de l'élément métallique (250) est en contact étroit avec la face d'extrémité arrière (232-12) de l'élément d'arrêt (232-1), de sorte que l'élément d'arrêt (232-1) de la languette (230) soit coincé dans la partie exposée (252) de l'élément métallique (250).

4. Connecteur femelle selon la revendication 2 ou 3, la partie d'extrémité avant (252-1) et la partie d'extrémité arrière (252-2) sont disposées dans le sens de la longueur de la languette du connecteur femelle.

5. Connecteur femelle selon l'une quelconque des revendications 1 à 4, dans lequel la première face d'extrémité (211) est munie d'une rainure (212), l'anneau étanche (220) comprend une première partie (221) et une seconde partie (222), la première partie (221) est insérée dans la rainure, la seconde partie (222) est exposée à l'extérieur de la rainure, et la seconde partie (222) comprend la face d'extrémité externe (222-2) .

6. Connecteur femelle selon la revendication 5, dans lequel une couche adhésive (240) est disposée entre la première partie (221) et la rainure (212), et la couche adhésive est fixée séparément à une surface de la première partie et à une surface de la rainure.

7. Connecteur femelle selon la revendication 5 ou 6, dans lequel l'anneau étanche (210) comprend une face d'extrémité interne (221-1), la face d'extrémité interne est une surface étagée, et la face d'extrémité interne comprend une surface étagée interne (221-1) et une surface étagée externe (222-1) ; la surface étagée interne est une face d'extrémité de la première partie (221) qui est en contact avec une surface inférieure de la rainure (212), la surface étagée externe est une face d'extrémité de la seconde partie (222) qui est en contact avec la première face d'extrémité (211), et une zone de la face d'extrémité externe (222-2) est supérieure à une zone de la surface étagée interne (221-1).

8. Connecteur femelle selon l'une quelconque des revendications 1 à 7, dans lequel l'élément métallique est en acier.

9. Connecteur femelle selon l'une quelconque des revendications 1 à 8, dans lequel le boîtier est en plastique.

10. Connecteur femelle selon l'une quelconque des revendications 1 à 9, dans lequel l'anneau étanche est en gel de silice.

11. Dispositif électronique (100), dans lequel le dispositif électronique comprend un boîtier (101) et un connecteur femelle (200) selon l'une quelconque des revendications 1 à 10.
